# EUROPEAN PATENT APPLICATION

(11) **EP 1 114 671 A1**
(43) Date of publication of application: **11.07.2001**
(21) Application number: 00850217.1
(22) Date of filing: 21.12.2000
(51) Int. Cl.: B01F 7/16, A47J 43/046, B01F 13/04

(54) **Mixer with safety device**

(30) Priority: 05.01.2000 SE 0000022
(71) Applicant: AKTIEBOLAGET ELECTROLUX (publ.), 105 45 Stockholm (SE)
(72) Inventor: Öfverberg, Donald, 590 90 Ankarsrum (SE)
(74) Representative: Schmerer, Sven Erik

(57) **Abstract**

A safety device for a mixer comprising a container (12) with a bottom (12a) and at least one side wall (12b), an inlet opening (22) arranged at the upper part of the container, and a shaft (15) extending through the bottom to drive at least one tool (26), such as one or several knifes, arranged near the bottom. The shaft (15) has a connecting element (16) extending into the container and being arranged to drive a removable follower (18) which supports the tool (26), the follower (18) being supported by a cover part (21) arranged at a distance from said bottom (12a).

## Description

This invention generally relates to a safety device for a mixer and more specifically to a container with a bottom and one or several side walls and an inlet opening arranged at the upper part of the container and a shaft extending through the bottom to drive at least one tool, such as one or several knives, arranged near the bottom.

Devices of the type described above are known and are used as separate units (together with a frame part) and as accessories for other types of food preparing machines. However, many of these devices have shortcomings with regard to safety, since there is a risk that the operator or a child may put a finger or a hand into the mixer when it is being used, which can cause injuries to the person in question.

The purpose of this invention is to achieve a mixer which has a high degree of safeness and which makes it impossible for a person to get in touch with the rotating knife at the bottom of the container. This is achieved by a device with a shaft extending through the bottom of the device that drives the device's tools, such as one or several knives. The shaft is connected, by means of a connecting element in the device, to a removable section that contains the device's tool and supports a cover with one or more small openings. The cover limits access to the tool when the removable section is in the mixer. When the removable section is not in the mixer, there are no tools to be concerned about.

A fuller understanding of the invention may be had by referring to the following description and claims taken in conjunction with the accompanying drawings, wherein:
Fig. 1 is a vertical section through the device according to the invention.
Fig. 2 is a perspective view of a detail of the device in Fig. 1.

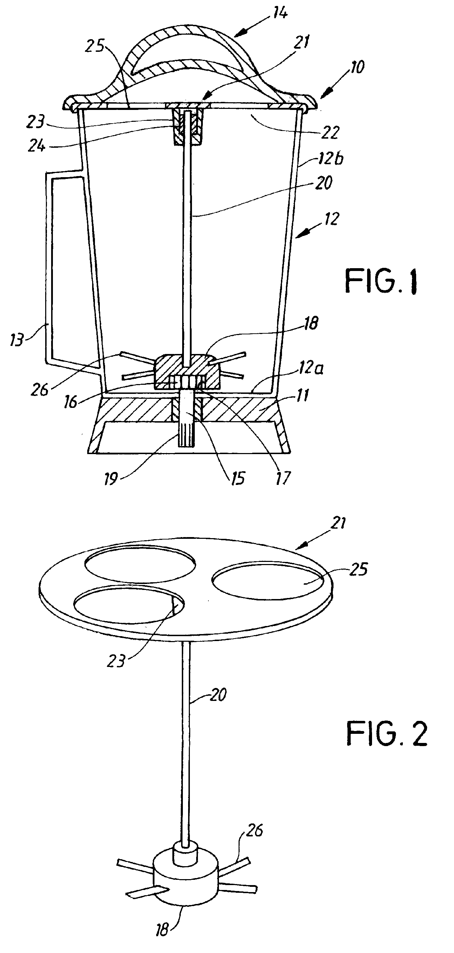

An embodiment of the invention will now be described with reference to the accompanying drawings of Fig. 1 and Fig. 2. The mixer 10 comprises a base part 11 on which a container 12 is arranged. The base part is fixed to a frame part (not shown) by means of a locking device (not shown), supporting a drive motor and necessary control means. The container, which preferably is manufactured of a transparent material, for instance Plexiglass, is formed by a bottom 12a which is permanently connected to the base part 11 and a slightly conical side wall 12b having a handle 13. The container is covered by a removable lid 14.

A shaft 15 extends through the bottom 12a of the container and the base part 11. The shaft 15 is rotatably arranged in the base part 11 and sealed at the container bottom 12a. The upper end of the shaft 15 is provided with a connecting element 16 having several softly rounded axially extending ridges intended to engage grooves arranged in a recess 17 of a removable follower 18, which will be described below. The lower end of the shaft 15 has several ridges 19 to engage a drive shaft (not shown) arranged in the frame part, the connection between the drive shaft and the shaft 15 being disengaged when the mixer 10 is lifted from the frame part.

The follower 18 is, via a thin connecting shaft 20, connected to a cover part 21 comprising a mainly circular plate whose periphery is arranged to rest on the upper edge of the container which defines an inlet opening 22 through which the container can be filled. The cover part 21 has a central hub 23 with a bearing 24 in which the connecting shaft 20 is rotatably supported. The cover part 21 also has several openings 25 through which the container can be filled when the cover part is placed on the container. The follower 18 is provided with several extending knives 26 which, when the follower is rotated, disintegrate the contents that are present in the container.

Instead of, as has been described above, using a rotating connecting shaft 20 that is supported by the cover part 21, it is possible to use a stationary connecting shaft that is permanently connected to the cover part 21 at its upper end, and that rotatably supports the follower of the rotatable fixed shaft at its lower end.

The device operates in the following manner. When the mixer is to be used, the lid 14 is removed and the container 12 is filled with the liquids and/or ingredients that are to be mixed through the openings 25. When the lid 14 has been placed on the cover part 21, the machine is activated which means that the shaft 15 starts to rotate and drives the follower 18 with its knives such that the contents of the mixer are mixed and disintegrated. Further ingredients, if any, that are to be mixed are successively filled or inserted through the openings 25 in the cover part 21 when the lid has been removed.

Since the openings 25 are much smaller than the inlet opening 22, a hand cannot reach the knives when they are rotating. If the cover part with the connecting shaft 20 is removed and a hand is inserted into the container when the machine is running, there will not be any serious injuries since the hand in such a case only gets in touch with the connecting element 16 which has a softly rounded shape.

The arrangement described above also has the advantage that it simplifies cleaning of the container as well as the follower with its knives.

It should be evident that this disclosure is by way of example and the various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A safety device for a mixer comprising a container (12) with a bottom (12a) and at least one side wall (12b) and an inlet opening (22) arranged at an upper part of the container and a shaft (15) extending through the bottom to drive at least one tool (26), arranged near the bottom, **characterized in** that the shaft (15) has a connecting element (16) extending into the container and being arranged to drive a removable follower (18) supporting the tool (26), the follower (18) being supported by a cover part (21) arranged at a distance from the bottom (12a), the cover part limiting access to tool (26).

2. A safety device according to claim 1, **characterized in** that the cover part (21) is supported by the container (12) at the edge of the inlet opening (22).

3. A safety device according to claim 1 or 2, **characterized in** that the cover part (21) is provided with at least one opening (25).

4. A safety device according to any of the preceding claims, **characterized in** that the follower (18) is connected to the cover part (21) by means of a connecting shaft (20) which is connected to the cover part.

5. A safety device according to any of the preceding claims, **characterized in** that the connecting element (16) cooperates with a recess (17) at a lower side of the follower (18).

6. A safety device according to claim 4, **characterized in** that the cover part (21), the connecting shaft (20) and the follower (18) are one integrated unit.

7. A safety device according to any of the preceding claims, **characterized** in that the mixer is provided with a lid (14) covering the opening (25) of the cover part.
